# EUROPÄISCHE PATENTSCHRIFT

(11) **EP 2 888 623 B1**
(45) Veröffentlichungstag und Bekanntmachung des Hinweises auf die Patenterteilung: **13.01.2021**
(21) Anmeldenummer: 13742472.7
(22) Anmeldetag: 01.08.2013
(51) Int. Cl.: G02B 27/01, G06T 11/00

(54) **BETREIBEN EINES HEAD-UP-DISPLAYS EINES FAHRZEUGS UND BILDERMITTLUNGSSYSTEM FÜR DAS HEAD-UP-DISPLAY**
OPERATING A HEAD-UP DISPLAY OF A VEHICLE AND IMAGE DETERMINING SYSTEM FOR THE HEAD-UP DISPLAY
COMMANDE D'UN AFFICHAGE TÊTE HAUTE D'UN VÉHICULE ET SYSTÈME DE FORMATION D'IMAGES POUR L'AFFICHAGE TÊTE HAUTE

(30) Priorität: 22.08.2012 DE 102012214903
(43) Veröffentlichungstag der Anmeldung: 01.07.2015
(73) Patentinhaber: Bayerische Motoren Werke Aktiengesellschaft, 80809 München (DE)
(72) Erfinder: DOLLINGER, Klaus, 80469 München (DE); SCHWAB, Axel, 80538 München (DE); BUCHNER, Alexander, 80997 München (DE)
(86) Internationale Anmeldenummer: PCT/EP2013/066149
(87) Internationale Veröffentlichungsnummer: WO 2014/029596

(56) Entgegenhaltungen:
- DE-A1-102010 013 395
- DE-T2- 3 888 439
- US-A1- 2006 139 503
- US-A1- 2009 284 552
- US-A1- 2010 036 548
- US-A1- 2011 043 644

## Beschreibung

Die Erfindung betrifft ein Verfahren und Vorrichtung zum Betreiben eines Head-up-Displays eines Fahrzeugs sowie ein Bildermittlungssystem für das Head-up-Display.

In einem Kraftfahrzeug werden technische Informationen, beispielsweise die aktuelle Geschwindigkeit, die Drehzahl des Motors oder die Öltemperatur, sowie Verkehrs- und Navigationsdaten während der Fahrt für den Fahrer bereitgestellt. Die Informationen werden üblicherweise auf einer Instrumententafel dargestellt. Beim Ablesen der angezeigten Informationen von der Instrumententafel ist ein Fahrer zumindest kurzfristig vom Verkehrsgeschehen abgelenkt. Head-up-Displays ermöglichen, Informationen direkt im Sichtbereich des Fahrers auf der Windschutzscheibe des Fahrzeugs anzuzeigen. Dadurch können Informationsinhalte erfasst werden, während gleichzeitig die Straßenverhältnisse im Blickfeld des Fahrers bleiben.

Moderne Head-up-Displays erzeugen ein virtuelles Bild, das für den Fahrer in einem gewissen Abstand vor der Windschutzscheibe, beispielsweise am Ende der Motorhaube, zu liegen scheint.

Moderne Fahrzeuge weisen zunehmend Fahrerassistenzsysteme auf. Mittels dieser Fahrerassistenzsysteme können beispielsweise Objekte, wie Fußgänger, andere Fahrzeuge und Verkehrsschilder erkannt und lokalisiert werden. Das Head-up-Display kann genutzt werden, Informationen bezüglich den erkannten Objekten optisch zu signalisieren.

Die DE 10 2010 013395 A1 betrifft ein Verfahren zum Anzeigen einer Grafik, die eine Betriebsumgebung eines Fahrzeugs darstellt. Das bekannte Verfahren umfasst, dass Informationseingänge überwacht werden, die die Betriebsumgebung des Fahrzeugs beschreiben, die Informationseingänge verarbeitet werden, um eine kritische Information zu ermitteln, ein Ort der Augen eines Bedieners des Fahrzeugs überwacht wird, eine registrierte Grafik, die die kritische Information beschreibt, die vor einer Ansicht des Bedieners durch eine nicht transparente Komponente des Fahrzeugs versteckt ist, auf der Grundlage des Orts der Augen des Bedieners ermittelt wird, und die registrierte Grafik, die die kritische Information beschreibt, die vor der Ansicht des Bedieners versteckt ist, an der nicht transparenten Komponente des Fahrzeugs angezeigt wird, wobei die nicht transparente Komponente ein Material umfasst, das in Ansprechen auf einen Anregungsprojektor reagiert, um eine Grafik anzuzeigen.

Die DE 38 88 439 T2 betrifft ein Anzeigesystem, um bewegungsbezogene Information an dem Fahrzeug an den Fahrer zu melden und es ihm zu ermöglichen, das Fahrzeug einfacher und sicherer zu fahren, indem die Bewegung des Fahrzeugs vorhergesagt und die Bewegungstrajektorie des Fahrzeugs dem vor dem Fahrzeug gesehenen Blickfeld überlagert wird.

In der US 2011/046344 A1 wird ein Verfahren zur Anpassung der Auflösung einer Kamera an eine Auflösung eines Displays beschrieben.

Die US 2006/139503 A1 befasst sich mit einem Verfahren und einer Vorrichtung, um einem Betrachter ein Bild mit weniger optischen Artefakten anzuzeigen.

Die Druckschrift US2010/0036548 A1 offenbart ein Verfahren zum Betreiben einer Anzeigevorrichtung, die von einem Benutzer eines Flugzeuges sichtbar ist. Dabei wird ein erstes Bild , das ein Sichtfeld aus der Sicht des Flugzeuges auf ein tatsächliches Gelände zeigt, und zweites Bild über dem ersten Bild angezeigt. Das zweite Bild umfasst einen vertikalen Positionsanzeiger, der eine vertikale Position des Flugzeugs relativ zur ausgewählten Flugstrecke angibt.

Die Druckschrift US 2009/0284552 A1 offenbart ein Verfahren zum Betreiben eines Avionik-Systems mit einem Headset und einer Head up Anzeigevorrichtung, wobei eine anfängliche Orientierung des Headsets detektiert wird, wenn sich die HUD-Anzeigevorrichtung in einem ersten Betriebszustand befindet. Es wird eine Menge von bestimmten Bewegungen des Headsets, die mit der anfänglichen Ausrichtung des Headsets beginnen, detektiert. Abhängig von der Detektion der vorstimmten Menge der Bewegungen wird die HUD Anzeigevorrichtung von dem ersten Betriebszustand zu einem zweiten Betriebszustand umgeschaltet und die HUD Anzeigevorrichtung solange in dem zweiten Betriebszustand behalten, bis das Headset zur anfänglichen Ausrichtung zurückkehrt.

Die Aufgabe, die der Erfindung zu Grunde liegt, ist es, ein Verfahren und eine Vorrichtung zum Betreiben eines Head-up-Displays sowie ein Bildermittlungssystem zu schaffen, die einen Beitrag dazu leisten, dass Informationen qualitativ hochwertig mittels des Head-up-Displays optisch signalisiert werden können.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich gemäß einem ersten Aspekt aus durch ein Verfahren und eine korrespondierende Vorrichtung zum Betreiben eines Head-up-Displays. Hierbei wird abhängig von einem vorgegebenen dreidimensionalen Fahrzeugumfeldmodell und abhängig von einem aktuell erfassten zweiten Bild der Bildfolge ein korrigiertes Anzeigebild ermittelt. Das Fahrzeugumfeldmodell ist hierbei abhängig von zumindest einem ersten Bild einer Bildfolge ermittelt und umfasst ein in dem ersten Bild detektiertes Objekt, das eine vorgegebene resultierende absolute Position und/oder eine vorgegebene resultierende Position in Bezug auf das Fahrzeug aufweist. Das zweite Bild ist eine vorgegebene Zeitdauer nach dem ersten Bild erfasst und umfasst das detektierte Objekt. Das korrigierte Anzeigebild umfasst zumindest ein grafisches Element, das das detektierte Objekt repräsentiert und wird derart ermittelt, dass es geeignet ist, auf ein vorgegebenes Anzeigefeld des Head-up-Displays projiziert zu werden, so dass das zumindest eine grafische Element von einem Betrachter des Anzeigefelds aus einer vorgegebenen Betrachtungsposition heraus mit einem direkten Bezug zu der realen Umgebung des Fahrzeugs wahrgenommen wird.

Vorteilhafterweise ermöglicht dies, dass Latenz und/oder Verzögerungszeiten, die bei einer Ermittlung des ursprünglichen Anzeigebildes entstehen können, korrigiert werden können.

Vorteilhafterweise kann dies einen Beitrag dazu leisten, dass Informationen qualitativ hochwertig mittels des Head-up-Displays optisch signalisiert werden können. Das grafische Element kann kontaktanalog angezeigt werden. Bei Head-Up-Displays wird zwischen kontaktanaloger und nichtkontaktanaloger Darstellung unterschieden. Kontaktanaloge Darstellungsformen reichern die vom Fahrer wahrgenommene Umgebung durch Überlagerung einer künstlich erzeugten Szenerie an. Die Information wird mit einem direkten Bezug zur Umwelt angezeigt.

Verarbeitungszeiten und/oder Latenzzeiten, die aufgrund einer Übertragung von Bilddaten im Fahrzeug und/oder der Ermittlung des ursprünglichen und/oder des korrigierten Anzeigebildes entstehen, insbesondere aufgrund von aufwendigen Algorithmen für eine Objekterkennung und/oder für eine Objektlokalisierung und/oder eine Bewegungsprädiktion der ermittelten Objekte, können kompensiert werden. Vorteilhafterweise ist es so möglich, dass die Darstellung des zumindest einen grafischen Elements auf dem Head-up-Display positionsgenau, oder zumindest sehr positionsgenau, und ohne zeitlichen Verzug, oder zumindest mit nur sehr geringem zeitlichen Verzug, erfolgen kann. Ein weiterer Vorteil ist, dass für die Bewegungsprädiktion einfachere Algorithmen genutzt werden können und somit eine effizientere Verarbeitung möglich ist.

Abhängig von dem korrigierten Anzeigebild kann ein Signalisierungssignal ermittelt werden für eine Ansteuerung des Head-up-Displays zur optischen Signalisierung des korrigierten Anzeigebildes. Das Signalisierungssignal kann jeweilige Bildpunktwerte des korrigierten Anzeigebildes repräsentieren.

In einer vorteilhaften Ausgestaltung des ersten Aspekts wird das korrigierte Anzeigebild ermittelt abhängig von einem ursprünglichen Anzeigebild, das das zumindest eine grafisches Element aufweist, das das detektierte Objekt des erfassten ersten Bildes repräsentiert, wobei das ursprüngliche Anzeigebild abhängig von dem vorgegebenen dreidimensionalen Fahrzeugumgebungsmodell derart ermittelt wird, dass es geeignet ist, auf das vorgegebene Anzeigefeld des Head-up-Displays projiziert zu werden, so dass das zumindest eine grafische Element von dem Betrachter des Anzeigefelds aus der vorgegebenen Betrachtungsposition heraus mit dem direkten Bezug zu der realen Umgebung des Fahrzeugs wahrgenommen wird. Dies kann vorteilhafterweise einen Beitrag dazu leisten, dass das Ermitteln des korrigierten Anzeigebildes einfach und schneller erfolgen kann, da in diesem Fall bereits eine Bildsynthese, auch Rendering genannt, erfolgt ist und Bildpunktwerte von zweidimensionalen Bildern verglichen und/oder ausgewertet werden können.

In einer weiteren vorteilhaften Ausgestaltung des ersten Aspekts wird abhängig von einer ermittelten Eigenbewegung des Fahrzeug ein Bildausschnitt des zweiten Bildes ermittelt, der das zumindest eine Objekt umfasst, und abhängig von dem Bildausschnitt des zweiten Bildes wird das korrigierte Anzeigebild ermittelt wird. Dies hat den Vorteil, dass es ausreichend sein kann, eine geringere Anzahl von Bilddaten zu übertragen und/oder zu verarbeitet zum Ermitteln des korrigierten Anzeigebildes. Der Bildausschnitt des zweiten Bildes kann zu einem Bildausschnitt korrespondieren, den das korrigierte Anzeigbild repräsentiert.

In einer weiteren vorteilhaften Ausgestaltung des ersten Aspekts umfasst das zweite Bild ein Stereobild und der Bildausschnitt des zweiten Bildes wird abhängig von einer Position des Fahrzeugführers und einer Erfassungsposition des zweiten Bildes ermittelt. Dies hat den Vorteil, dass ein blickwinkelkorrigierter Bildausschnitt des zweiten Bildes genutzt werden kann zur Ermittlung des korrigierten Anzeigebildes. Vorteilhafterweise ermöglicht dies eine qualitativ hochwertige perspektivische Darstellung des zumindest einen grafischen Elements auf dem Head-up-Display, so dass aus Sicht des Fahrzeugführers die Darstellung des zumindest einen grafischen Elements verzerrungsfrei erfolgt.

In einer weiteren vorteilhaften Ausgestaltung wird eine aktuelle erste Position des zumindest einen Objekts ermittelt abhängig von dem zweiten Bild und/oder von dem Bildausschnitt des zweiten Bildes. Abhängig von der ersten Position und einer zweiten Position, die das zumindest eine Objekt in dem Fahrzeugumfeldmodell aufweist, wird das korrigierte Anzeigebild ermittelt. Dies ermöglicht ein effizientes Ermitteln eines Positionsversatzes des zumindest einen Objekts und damit ein effizientes Ermitteln des korrigierten Anzeigebildes.

In einer weiteren vorteilhaften Ausgestaltung des ersten Aspekts wird ein charakteristisches Bildmerkmal des zumindest einen Objektes ermittelt abhängig von dem zweiten Bild und/oder von dem Bildausschnitt des zweiten Bildes und abhängig von dem Bildmerkmal wird das korrigierte Anzeigebild ermittelt. Dies hat den Vorteil, dass das zweite Bild und/oder der Bildausschnitt des zweiten Bildes sehr einfach und schnell analysiert werden kann. Das Ermitteln des korrigierten Anzeigebildes kann somit sehr effizient und schnell erfolgen. Hierbei kann das jeweilige Bildmerkmal eine 1-Bit-Grafik umfassen.

In einer weiteren vorteilhaften Ausgestaltung des ersten Aspekts umfasst das charakteristische Bildmerkmal eine jeweilige Objektkante des zumindest einen Objekts. Dies ermöglicht eine effiziente Berechnung des Bildmerkmals.

In einer weiteren vorteilhaften Ausgestaltung des ersten Aspekts wird abhängig von einer charakteristischen Bildtextur des zumindest einen Objekts in dem ersten Bild und/oder dem zweiten Bild und/oder dem Bildausschnitt des zweiten Bildes eine Farbe und/oder Helligkeit des grafischen Elements in dem korrigierten Anzeigebild angepasst. Dies hat den Vorteil, dass die Farbe und/oder die Helligkeit des grafischen Elements abhängig von einer Farbe und/oder Helligkeit des zumindest einen Objekts angepasst werden kann.

Gemäß einem zweiten Aspekt zeichnet sich die Erfindung aus durch ein Bildermittlungssystem für ein Head-up-Display. Das Bildermittlungssystem umfasst eine Auswerteeinheit, die ausgebildet ist, abhängig von vorgegebenen Bilddaten eines erfassten ersten Bildes einer Bildfolge zumindest ein vorgegebenes Objekt zu detektieren und eine Position des zumindest einen Objekts zu ermitteln. Des Weiteren umfasst das Bildermittlungssystem eine Prädiktionseinheit, die ausgebildet ist, eine absolute Bewegung und/oder eine relative Bewegung des zumindest einen Objekts in Bezug auf das Fahrzeug zu ermitteln abhängig von zumindest einem vorgegebenen Sensorsignal. Das Bildermittlungssystem umfasst eine Szeneneinheit, die ausgebildet ist, abhängig von dem zumindest einen ersten Bild der Bildfolge und der ermittelten absoluten und/oder relativen Bewegung des zumindest einen Objekts ein dreidimensionalen Fahrzeugumgebungsmodell zu ermitteln. Des Weiteren umfasst das Bildermittlungssystem eine Vorrichtung zum Betreiben des Head-up-Display gemäß dem ersten Aspekt.

Vorteilhafte Ausgestaltungen des ersten Aspekts gelten hierbei auch für den zweiten Aspekt.

Es zeigen:
- Figur 1: eine schematische Darstellung eines Head-up-Displays eines Fahrzeugs,
- Figur 2: ein Ausführungsbeispiel eines Bildermittlungssystems für ein Head-up-Display,
- Figur 3: ein weiteres Ausführungsbeispiel des Bildermittlungssystems für das Head-up-Display,
- Figur 4: ein Zeitdiagramm für ein Ermitteln und Signalisieren eines korrigierten Anzeigebildes.

Elemente gleicher Konstruktion oder Funktion sind figurenübergreifend mit den gleichen Bezugszeichen versehen.

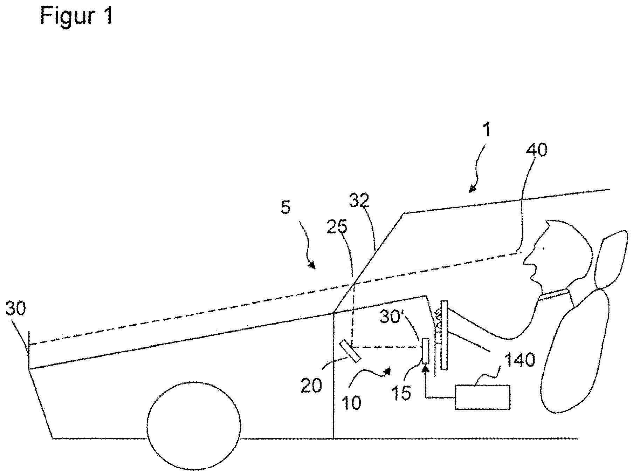

Figur 1 zeigt eine Ausführungsform eines Head-up-Displays 5 für ein Fahrzeug 1, insbesondere ein Automobil. Das Head-up-Display 5 umfasst eine Bilderzeugungseinrichtung 10 zur Erzeugung eines virtuellen Bildes 30. Die Bilderzeugungseinrichtung 10 umfasst ein Display 15 zur Erzeugung eines realen Bildes 30' und ein optisches System zur Erzeugung des virtuellen Bildes 30. Das optische System umfasst einen abbildenden ersten 20 und zweiten Spiegel 25. Ein von dem Display 15 erzeugtes reales Bild 30' wird zunächst auf den ersten Spiegel 20 gelenkt und von dem ersten Spiegel 20 auf den zweiten Spiegel 25 projiziert. Der zweite Spiegel 25 kann als eine Windschutzscheibe 32 eines Fahrzeugs 1 ausgebildet sein.

Aus einer vorgegebenen Eyebox 40 eines Fahrers erscheint in einem Abstand vor der Windschutzscheibe 32, beispielsweise am Ende der Motorhaube, das virtuelle Bild 30. Das virtuelle Bild 30 kann im Allgemeinen nur aus einem definierten Bereich, der so genannten Eyebox 40, gesehen werden. Die Eyebox 40 wird üblicherweise so ausgelegt, dass aus dem gesamten gewünschten Eyeboxbereich das komplette virtuelle Bild 30 gesehen werden kann.

In dem virtuellen Bild 30 können statische Anzeigeinhalte, die dauerhaft oder häufig angezeigt werden, dargestellt werden. Des Weiteren kann die Bilderzeugungseinrichtung 10 dazu ausgebildet sein, dass in dem virtuellen Bild 30 Bildinhalte angezeigt werden, die nur situativ und kurzzeitig angezeigt werden. Das Head-up-Display 5 kann insbesondere als kontaktanaloges Head-up-Display 5 ausgebildet sein. Bei Head-up-Displays 5 wird zwischen kontaktanaloger und nichtkontaktanaloger Darstellung unterschieden. Kontaktanaloge Darstellungsformen reichern die vom Fahrer wahrgenommene Umwelt durch Überlagerung einer künstlich erzeugten Szenerie an. Nichtkontaktanaloge Darstellungsformen stellen dagegen Informationen ohne direkten Bezug zur Umwelt dar.

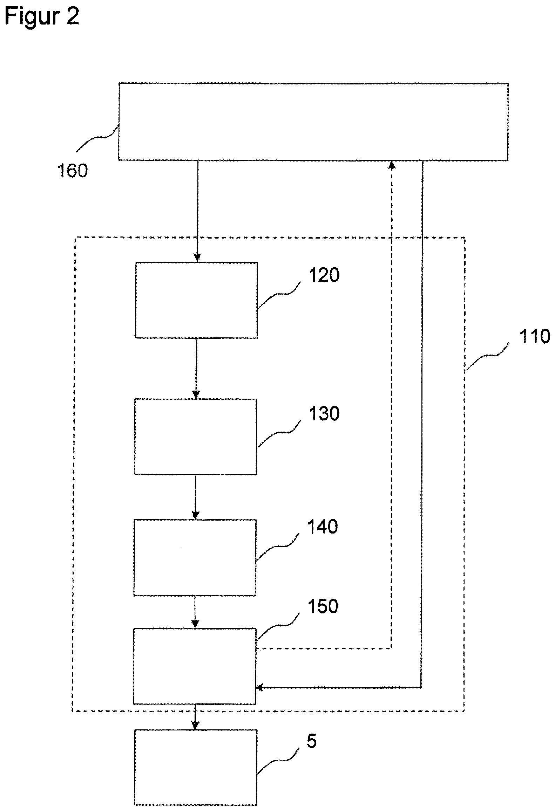

Figur 2 zeigt ein Bildermittlungssystem 110 für das Head-up-Display 5 des Fahrzeugs 1.

Das Bildermittlungssystem 110 weist eine Auswerteeinheit 120, eine Prädiktionseinheit 130, eine Szeneneinheit 140 und eine Vorrichtung 150 zum Betreiben des Head-up-Displays 5 auf. Die Auswerteeinheit 120, die Prädiktionseinheit 130, die Szeneneinheit 140 und die Vorrichtung 150 können jeweils eine Recheneinheit aufweisen oder eine Recheneinheit gemeinsam nutzen. Die Auswerteeinheit 120 und die Prädiktionseinheit 130 können ergänzend für ein oder mehrere Fahrerassistenzsysteme genutzt werden.

Dem Bildermittlungssystem 110 ist eine oder sind mehrere optische Erfassungseinrichtungen 160 zugeordnet. Alternativ kann das Bildermittlungssystem 110 die optischen Erfassungseinrichtung 160 oder mehrere optische Erfassungseinrichtungen 160 umfassen. Die zumindest eine optische Erfassungseinrichtung 160 ist ausgebildet, eine Bildfolge von Bildern eines vorgegebenen Umfelds des Fahrzeugs 1 zu erfassen. Die zumindest eine optische Erfassungseinrichtung 160 kann eine Kamera, insbesondere eine Videokamera, umfassen.

Die optische Erfassungseinrichtung 160 ist signaltechnisch gekoppelt mit dem Bildermittlungssystem 110 zur Übertragung von Bilddaten der erfassten Bilder.

Die Bilddaten von erfassten Bildern werden von der optischen Erfassungseinrichtung 160 an die Auswerteeinheit 120 weitergeleitet.

Die zumindest eine Auswerteeinheit 120 ist ausgebildet, abhängig von den Bilddaten eines erfassten ersten Bildes einer Bildfolge zumindest ein vorgegebenes Objekt zu detektieren und eine Position des zumindest einen Objekts zu ermitteln. Die zumindest eine Auswerteeinheit 120 ist beispielsweise ausgebildet, Objekte zu erkennen, die sich auf einer Fahrbahn bewegen. Alternativ oder zusätzlich ist die Auswerteeinheit 120 ausgebildet, vorgegebene Verkehrszeichen und/oder eine Fahrspur zu erkennen.

Die Position des zumindest einen Objekts umfasst eine absolute Position und/oder eine relative Position des Objekts in Bezug auf das Fahrzeug 1. Für die Objekterkennung und Objektlokalisierung abhängig von den Bilddaten können dem Fachmann hierfür bekannte Algorithmen genutzt werden.

Die zumindest eine Auswerteeinheit 120 ist signaltechnisch gekoppelt mit der Prädiktionseinheit 130 zur Weiterleitung der ermittelten Objektdaten an die Prädiktionseinheit 130.

Die Prädiktionseinheit 130 ist ausgebildet eine absolute Bewegung und/oder eine relative Bewegung des zumindest einen Objekts in Bezug auf das Fahrzeug 1 zu ermitteln abhängig von zumindest einem vorgegebenen Sensorsignal.

Die Prädiktionseinheit 130 ist somit ausgebildet zur Prädiktion von Bewegungen der erkannten Objekte. Der Prädiktionseinheit 130 werden beispielsweise Daten von einem Ortungsgerät sowie von einer zusätzlichen Sensorik zugeführt. Das Ortungsgerät kann beispielsweise einen winkelauflösenden Radarsensor umfassen, mit dem für jedes geortete Objekt der Abstand x (näherungsweise in Richtung der aktuellen Längsachse des eigenen Fahrzeugs 1), die Relativgeschwindigkeit des Objekts sowie der Azimutwinkel des Objekts gemessen werden. Die Prädiktionseinheit 130 ist beispielsweise ausgebildet, abhängig von dem Abstand und dem Azimutwinkel ein Querversatz des Objekts zu ermitteln. Die Sensorik umfasst beispielsweise einen Geschwindigkeitssensor zur Messung der Eigengeschwindigkeit des mit dem des Fahrzeugs 1 sowie einen Girratensensor, mit dem die Gierrate dieses Fahrzeugs 1 gemessen wird. Die Prädiktionseinheit 130 umfasst verschiedene dynamische Modelle, die dazu dienen, das dynamische Verhalten eines jeweilig georteten Objekts zu modellieren und das zukünftige Verhalten zu prädizieren.

Die Prädiktionseinheit 130 ist signaltechnisch gekoppelt mit der Szeneneinheit 140.

Die Szeneneinheit 140 ist ausgebildet, abhängig von dem zumindest einen ersten Bild der Bildfolge und der ermittelten absoluten und/oder relativen Bewegung des zumindest einen Objekts ein dreidimensionalen Fahrzeugumgebungsmodell zu ermitteln. Das Fahrzeugumgebungsmodell kann zusätzlich abhängig von vorgegebenen Streckendaten und/oder weiteren erfassten Sensorsignalen ermittelt werden, beispielsweise abhängig von einem Abstandsradarsignals oder eines Ultraschallsignal eines Ultraschallsensors eines Einparkhilfesystems. Die Streckendaten können beispielsweise in einer Kartendatenbank einer Navigationseinrichtung gespeichert sein. Ferner können für das Ermitteln des Fahrzeugumgebungsmodells von fahrzeugexternen Einrichtungen weitere über eine Luftschnittstelle bereitgestellte Umfelddaten genutzt werden.

Die Szeneneinheit 140 ist signaltechnisch gekoppelt mit der Vorrichtung 150 zum Betreiben des Head-up-Displays 5. Die Vorrichtung 150 ist ferner signaltechnisch gekoppelt mit der optischen Erfassungseinrichtung 160. Die Vorrichtung 150 zum Betreiben des Head-up-Displays 5 ist ausgebildet, abhängig von dem Fahrzeugumfeldmodell und abhängig von einem aktuell erfassten zweiten Bild der Bildfolge ein korrigiertes Anzeigebild zu ermitteln. Das Fahrzeugmodellumfeldmodell repräsentiert hierbei das zumindest eine in dem ersten Bild detektierte Objekt, das eine vorgegebene resultierende absolute Position und/oder eine vorgegebene resultierende Position in Bezug auf das Fahrzeug 1 aufweist. Das zweite Bild umfasst ebenfalls das detektiert Objekt, wobei das zweite Bild eine vorgegebenen Zeitdauer nach dem ersten Bild erfasst ist. Die vorgegebene Zeitdauer kann beispielsweise zwei bis vier Erfassungsperioden B_1, B_2, B_3, B_4 der optischen Erfassungseinrichtung 160 umfassen. Das korrigierte Anzeigebild umfasst zumindest ein grafisches Element, das das detektierte Objekt repräsentiert. Das korrigierte Anzeigebild wird hierbei derart ermittelt, dass es geeignet ist, auf ein vorgegebenes Anzeigefeld des Head-up-Displays 5 projiziert zu werden, so dass das zumindest eine grafische Element von einem Betrachter des Anzeigefelds aus einer vorgegebenen Betrachtungsposition heraus mit einem direkten Bezug zu der realen Umgebung des Fahrzeugs 1 wahrgenommen wird.

Die Vorrichtung 150 ist beispielsweise ausgebildet, abhängig von einer ermittelten Eigenbewegung des Fahrzeug 1 ein Bildausschnitt des zweiten Bildes zu ermitteln, der das zumindest eine Objekt umfasst, und abhängig von dem Bildausschnitt des zweiten Bildes das korrigierte Anzeigebild zu ermitteln. Hierbei kann vorgesehen sein, dass mittels des Prädiktionsmoduls die Eigenbewegung des Fahrzeugs 1 geschätzt wird. Die Vorrichtung 150 ist beispielsweise ausgebildet, abhängig von dieser ermittelten Eigenbewegung des Fahrzeugs 1 den Bildausschnitt des zweiten Bildes zu ermitteln und die Bilddaten für den Bildausschnitt des zweiten Bildes von der optischen Einrichtung anzufordern. Dies hat den Vorteil, dass die Übertragung der angeforderten Bilddaten von der optischen Erfassungseinrichtung 160 zu der Vorrichtung 150 schneller und/oder mit geringerer Übertragungsbandbreite erfolgen kann im Vergleich zu einer Übertragung sämtlicher Bilddaten des zweiten Bildes.

Ferner kann das zweite Bild ein Stereobild umfassen und der Bildausschnitt des zweiten Bildes kann abhängig von einer Position des Fahrzeugführers und einer Erfassungsposition des zweiten Bildes ermittelt werden.

Hierbei repräsentiert die Erfassungsposition vorzugsweise die Position der zumindest einen optischen Erfassungseinrichtung 160 im Fahrzeug 1. Dies ermöglicht einen blickwinkelkorrigierten Bildausschnitt des zweiten Bildes zu ermitteln.

Die Vorrichtung 150 ist beispielsweise ausgebildet, eine aktuelle erste Position des zumindest einen Objekts zu ermitteln abhängig von dem zweiten Bild und/oder von dem Bildausschnitt des zweiten Bildes. Abhängig von der ersten Position und einer zweiten Position, die das zumindest eine Objekt in dem Fahrzeugumfeldmodell aufweist, kann das korrigierte Anzeigebild ermittelt werden. Sind die erste und die zweite Position unterschiedlich kann eine Position des grafischen Elements in dem korrigierten Anzeigebild angepasst werden abhängig von der ersten und/oder zweiten Position.

Die Vorrichtung 150 ist beispielsweise ferner dazu ausgebildet ein charakteristisches Bildmerkmal des zumindest einen Objektes zu ermitteln abhängig von dem zweiten Bild und/oder von dem Bildausschnitt des zweiten Bildes und abhängig von dem charakteristischem Bildmerkmal das korrigierte Anzeigebild zu ermitteln. Das charakteristische Bildmerkmal kann eine jeweilige Objektkante des zumindest einen Objekts umfassen. Dies ermöglicht, dass die erste und zweite Position und/oder ein Positionsversatz des zumindest einen Objekts beispielsweise Mittels eines einfachen Mustervergleichs ermittelt werden kann.

Ferner kann vorgesehen sein, dass abhängig von einer charakteristischen Bildtextur des zumindest einen Objekts in dem ersten Bild und/oder dem zweiten Bild und/oder dem Bildausschnitt des zweiten Bildes eine Farbe und/oder Helligkeit des grafischen Elements in dem korrigierten Anzeigebild angepasst wird. Dies ermöglicht, abhängig von einer Farbe des zumindest einen Objekts, das grafische Element derart anzupassen, dass eine Wahrnehmung des grafischen Elements durch den Fahrzeugführer und/oder weitere Fahrzeugnutzer einfach erfolgen kann, insbesondere wenn der Fahrzeugführer das grafische Element, das zum Beispiel eine Umrandung umfasst, und ein reales Objekt auf der Fahrbahn überlagert wahrnimmt.

Die Vorrichtung 150 umfasst beispielsweise eine Bildsyntheseeinheit 250, auch Rendering Unit genannt, die ausgebildet ist, abhängig von dem dreidimensionalen Fahrzeugmodell jeweilige Bildpunktwerte des korrigierten Anzeigebildes zu ermitteln. Die Bildsyntheseeinheit 250 ist beispielsweise ausgebildet, von einem virtuellen Betrachter aus sichtbare Objekte zu ermitteln, ein Aussehen von Oberflächen, beeinflusst durch deren Materialeigenschaften, zu ermitteln und eine Lichtverteilung innerhalb einer Szene zu berechnen.

Die Vorrichtung 150 ist signaltechnisch gekoppelt mit der Head-up-Unit des Fahrzeugs 1. Die Vorrichtung 150 ist ausgebildet, abhängig von dem korrigierten Anzeigebild ein Signalisierungssignal zu ermitteln für eine Ansteuerung des Head-up-Displays 5 zur optischen Signalisierung des korrigierten Anzeigebildes. Das Signalisierungssignal repräsentiert hierbei jeweilige Bildpunktwerte des korrigierten Anzeigebildes. In dem in Figur 2 gezeigten Ausführungsbeispiel des Bildermittlungssystems 110 wird das korrigierte Anzeigebild auf Basis des dreidimensionalen Fahrzeugumfeldmodells und des zweiten Bildes ermittelt. Eine Bildsynthese, auch Rendering genannt, erfolgt erst nachdem die Position des zumindest einen Objekts korrigiert ist.

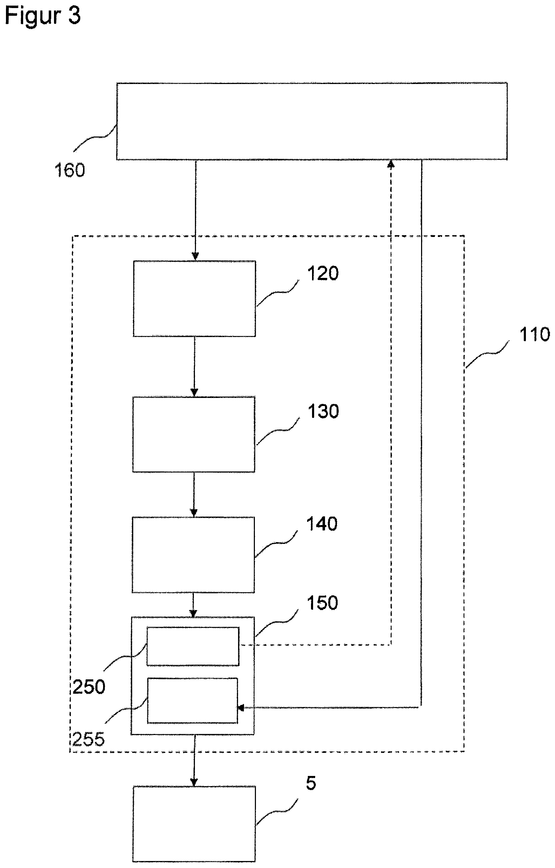

In dem in Figur 3 gezeigten Ausführungsbeispiel weist die Vorrichtung 150 die Bildsyntheseeinheit 250 auf und eine Vergleichs- und Korrektureinheit 255 auf. Im Unterschied zu dem in Figur 2 gezeigten Ausführungsbeispiel ist die Bildsyntheseeinheit 250 ist in diesem Fall ausgebildet, ein ursprüngliches Anzeigebild zu ermitteln. In diesem Fall wird das korrigierte Anzeigebild ermittelt auf Basis des zweiten Bildes und einem ursprünglichen Anzeigebild, das zumindest das grafisches Element aufweist, das das detektiertes Objekt des erfassten ersten Bildes repräsentiert. Hierbei wird das ursprüngliche Anzeigebild mit dem zumindest einen grafischen Element abhängig von dem vorgegebenen dreidimensionalen Fahrzeugumgebungsmodell derart ermittelt, dass es geeignet ist, auf das vorgegebene Anzeigefeld des Head-up-Displays 5 projiziert zu werden, so dass das zumindest eine grafische Element von dem Betrachter des Anzeigefelds aus der vorgegebenen Betrachtungsposition heraus mit dem direkten Bezug zu der realen Umgebung des Fahrzeugs 1 wahrgenommen wird.

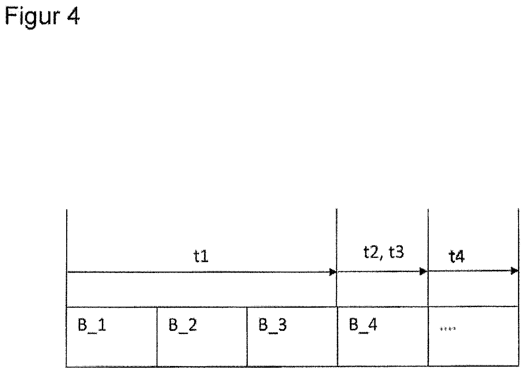

Figur 4 zeigt ein beispielhaftes Zeitdiagramm für das Ermitteln des korrigierten Anzeigebildes. Figur 4 zeigt mehrerer aufeinanderfolgende Bilderfassungsperioden B_1, B_2, B_3, B_4. Eine erste Zeitdauer t1 repräsentiert eine Verarbeitungszeit für die Objekterkennung und Objektlokalisierung. Eine zweite Zeitdauer t2 repräsentiert eine Verarbeitungszeit für die Bewegungsprädiktion und das Ermitteln des dreidimensionalen Fahrzeugumfeldmodells. Eine dritte Zeitdauer t3 repräsentiert eine Verarbeitungszeit, die erforderlich ist, zum Ermitteln des Bildausschnittes des zweiten Bildes. Eine vierte Zeitdauer t4 repräsentiert eine Verarbeitungszeit, die erforderlich ist für das Ermitteln des korrigierten Anzeigebildes, insbesondere für die Bildsynthese, sowie eine Übertragungszeit für ein Übertragen und Signalisieren der Bildpunktdaten des korrigierten Anzeigebildes an das Display des Head-up-Displays 5. Wie in Figur 4 zu sehen ist, umfasst die Verarbeitungszeit und/oder Latenzzeit von dem Erfassen des ersten Bildes bis zur Anzeige des zumindest einen grafischen Elements auf dem Head-up-Display 5 mehrer Erfassungsperioden B_1, B_2, B_3, B_4 der optischen Erfassungseinrichtung 160.

Die optische Erfassungseinrichtung 160 weist beispielsweise eine Periodendauer für das Erfassen von aufeinanderfolgenden Bildern von 60 ms auf. In dem in Figur 4 gezeigten Beispiel können somit eine Verarbeitungszeit von ca. 180 ms kompensiert werden.

### Bezugszeichenliste

- 1: Fahrzeug
- 5: Head-up-Display
- 10: Bilderzeugungseinrichtung
- 15: Display
- 20: erster Spiegel
- 25: zweiter Spiegel
- 30: virtuelles Bild
- 30': reales Bild
- 32: Windschutzscheibe
- 40: Eyebox
- 110: Bildermittlungssystem
- 120: Auswerteeinheit
- 130: Prädiktionseinheit
- 140: Szeneneinheit
- 150: Vorrichtung
- 160: optische Erfassungseinrichtung
- 250: Bildsyntheseeinheit
- 255: Vergleichs- und Korrektureinheit
- B_1, B_2, B_3, B4: Erfassungsperiode
- t1: erste Zeitdauer
- t2: zweite Zeitdauer
- t3: dritte Zeitdauer
- t4: vierte Zeitdauer

## Patentansprüche

1. Verfahren zum Betreiben eines Head-up-Displays (5) für ein Fahrzeug (1), bei dem
- abhängig von einem vorgegebenen dreidimensionalen Fahrzeugumfeldmodell, das abhängig von zumindest einem ersten Bild einer Bildfolge ermittelt ist und das ein in dem ersten Bild detektiertes Objekt umfasst, das eine vorgegebene resultierende absolute Position und/oder eine vorgegebene resultierende Position in Bezug auf das Fahrzeug (1) aufweist,
- abhängig von einem aktuell erfassten zweiten Bild der Bildfolge, das eine vorgegebene Zeitdauer nach dem ersten Bild erfasst ist und das das detektierte Objekt umfasst, ein korrigiertes Anzeigebild ermittelt wird, wobei das korrigierte Anzeigebild zumindest ein grafisches Element umfasst, das das detektierte Objekt repräsentiert und derart ermittelt wird, dass es geeignet ist, auf ein vorgegebenes Anzeigefeld des Head-up-Displays (5) projiziert zu werden, **dadurch gekennzeichnet, dass** das zumindest eine grafische Element von einem Betrachter des Anzeigefelds aus einer vorgegebenen Betrachtungsposition heraus mit einem direkten Bezug zu der realen Umgebung des Fahrzeugs (1) wahrgenommen wird, und dadurch dass das korrigierte Anzeigebild ermittelt wird abhängig von einem ursprünglichen Anzeigebild, das das zumindest eine grafisches Element aufweist, das das detektierte Objekt des erfassten ersten Bildes repräsentiert, wobei das ursprüngliche Anzeigebild abhängig von dem vorgegebenen dreidimensionalen Fahrzeugumgebungsmodell derart ermittelt wird, dass es geeignet ist, auf das vorgegebene Anzeigefeld des Head-up-Displays (5) projiziert zu werden, so dass das zumindest eine grafische Element von dem Betrachter des Anzeigefelds aus der vorgegebenen Betrachtungsposition heraus mit dem direkten Bezug zu der realen Umgebung des Fahrzeugs (1) wahrgenommen wird,und abhängig von einer ermittelten Eigenbewegung des Fahrzeug (1) ein Bildausschnitt des zweiten Bildes ermittelt wird, der das zumindest eine Objekt umfasst, und abhängig von dem Bildausschnitt des zweiten Bildes das korrigierte Anzeigebild ermittelt wird.

2. Verfahren nach Anspruch 1, bei dem
das zweite Bild ein Stereobild umfasst und der Bildausschnitt des zweiten Bildes abhängig von einer Position des Fahrzeugführers und einer Erfassungsposition des zweiten Bildes ermittelt wird.

3. Verfahren nach einem der vorstehenden Ansprüche, bei dem eine aktuelle erste Position des zumindest einen Objekts ermittelt wird abhängig von dem zweiten Bild und/oder von dem Bildausschnitt des zweiten Bildes, und abhängig von der ersten Position und einer zweiten Position, die das zumindest eine Objekt in dem in dem Fahrzeugumfeldmodell aufweist, das korrigierte Anzeigebild ermittelt wird.

4. Verfahren nach einem der vorstehenden Ansprüche, bei dem ein charakteristisches Bildmerkmal des zumindest einen Objektes ermittelt wird abhängig von dem zweiten Bild und/oder von dem Bildausschnitt des zweiten Bildes und abhängig von dem Bildmerkmal das korrigierte Anzeigebild ermittelt wird.

5. Verfahren nach einem der vorstehenden Ansprüche 1 bis 4, bei dem
das charakteristische Bildmerkmal eine jeweilige Objektkante des zumindest einen Objekts umfasst.

6. Verfahren nach einem der vorstehenden Ansprüche, bei dem abhängig von einer charakteristischen Bildtextur des zumindest einen Objekts in dem ersten Bild und/oder dem zweiten Bild und/oder dem Bildausschnitt des zweiten Bildes eine Farbe und/oder Helligkeit des grafischen Elements in dem korrigierten Anzeigebild angepasst wird.

7. Vorrichtung (150) zum Betreiben eines Head-up-Displays (5), die konfiguriert ist ein Verfahren gemäß einem der Ansprüche 1 bis 6 auszuführen.

8. Bildermittlungssystem (110) für ein Head-up-Display (5), umfassend:
- eine Auswerteeinheit (120), die ausgebildet ist, abhängig von vorgegebenen Bilddaten eines erfassten ersten Bildes einer Bildfolge zumindest ein vorgegebenes Objekt zu detektieren und eine Position des zumindest einen Objekts zu ermitteln,
- eine Prädiktionseinheit (130), die ausgebildet ist, eine absolute Bewegung und/oder eine relative Bewegung des zumindest einen Objekts in Bezug auf das Fahrzeug (1) zu ermitteln abhängig von zumindest einem vorgegebenen Sensorsignal,
- eine Szeneneinheit (140), die ausgebildet ist abhängig von dem zumindest einen ersten Bild der Bildfolge und der ermittelten absoluten und/oder relativen Bewegung des zumindest einen Objekts ein dreidimensionalen Fahrzeugumgebungsmodell zu ermitteln,
- eine Vorrichtung (150) nach Anspruch 7.

## Claims

1. Method for operating a head-up display (5) for a vehicle (1), in which,
- in dependence on a specified three-dimensional vehicle surroundings model that has been ascertained in dependence on at least one first image of an image sequence and comprises an object which is detected in the first image and which has a specified resulting absolute position and/or a specified resulting position relative to the vehicle (1),
- in dependence on a currently captured second image of the image sequence that has been captured a specified time period after the first image and comprises the detected object, a corrected display image is ascertained, wherein the corrected display image comprises at least one graphical element that represents the detected object and is ascertained such that it is suitable for being projected onto a specified display field of the head-up display (5), **characterized in that** the at least one graphical element is perceived by a viewer of the display field from a specified viewing position with a direct relationship to the real surroundings of the vehicle (1), and **in that**
the corrected display image is ascertained in dependence on an original display image having at least one graphical element that represents the detected object of the captured first image, wherein the original display image is ascertained in dependence on the specified three-dimensional vehicle surroundings model such that it is suitable for being projected onto the specified display field of the head-up display (5), with the result that the at least one graphical element is perceived by the viewer of the display field from the specified viewing position with the direct relationship to the real surroundings of the vehicle (1), and an image section of the second image comprising the at least one object is ascertained in dependence on an ascertained own movement of the vehicle (1) and the corrected display image is ascertained in dependence on the image section of the second image.

2. Method according to Claim 1, in which the second image comprises a stereo image and the image section of the second image is ascertained in dependence on a position of the vehicle driver and on a capturing position of the second image.

3. Method according to either of the preceding claims, in which a current first position of the at least one object is ascertained in dependence on the second image and/or on the image section of the second image, and the corrected display image is ascertained in dependence on the first position and a second position that the at least one object has in the vehicle surroundings model.

4. Method according to one of the preceding claims, in which a characteristic image feature of the at least one object is ascertained in dependence on the second image and/or on the image section of the second image and the corrected display image is ascertained in dependence on the image feature.

5. Method according to one of the preceding Claims 1 to 4, in which the characteristic image feature comprises a respective object edge of the at least one object.

6. Method according to one of the preceding claims, in which a colour and/or brightness of the graphical element is adapted in the corrected display image in dependence on a characteristic image texture of the at least one object in the first image and/or the second image and/or the image section of the second image.

7. Apparatus (150) for operating a head=up display (5), configured for carrying out a method according to one of Claims 1 to 6.

8. Image ascertainment system (110) for a head-up display (5), comprising:
- an evaluation unit (120) that is designed, in dependence on specified image data of a captured first image of an image sequence, to detect at least one specified object and to ascertain a position of the at least one object,
- a prediction unit (130) designed to ascertain an absolute movement and/or a relative movement of the at least one object relative to the vehicle (1) in dependence on at least one specified sensor signal,
- a scene unit (140) designed to ascertain a three-dimensional vehicle surroundings model in dependence on the at least one first image of the image sequence and the ascertained absolute and/or relative movement of the at least one object,
- an apparatus (150) according to Claim 7.

## Revendications

1. Procédé d'exploitation d'un affichage tête haute (5) pour un véhicule (1), dans lequel
- en fonction d'un modèle d'environnement de véhicule tridimensionnel prédéfini, qui est déterminé en fonction d'au moins une première image d'une série d'images et qui comprend un objet détecté sur la première image qui présente une position absolue résultante prédéfinie et/ou une position résultante prédéfinie par rapport au véhicule (1),
- en fonction d'une deuxième image actuellement détectée de la série d'images, qui est détectée une durée prédéfinie après la première image et qui comprend l'objet détecté, une image d'affichage corrigée est déterminée, l'image d'affichage corrigée comprenant au moins un élément graphique qui représente l'objet détecté et est déterminé de telle sorte qu'il est adapté pour être projeté sur un champ d'affichage prédéfini de l'affichage tête haute (5),
**caractérisé en ce que** ledit au moins un élément graphique est perçu en relation directe avec l'environnement réel du véhicule (1) par un observateur du champ d'affichage depuis une position d'observation prédéfinie, et
**en ce que** l'image d'affichage corrigée est déterminée en fonction d'une image d'affichage originale qui présente ledit au moins un élément graphique qui représente l'objet détecté de la première image détectée, dans lequel l'image d'affichage originale est déterminée en fonction du modèle d'environnement de véhicule tridimensionnel prédéfini de telle sorte qu'elle est adaptée pour être projetée sur le champ d'affichage prédéfini de l'affichage tête haute (5), de sorte que ledit au moins un élément graphique est perçu en relation directe avec l'environnement réel du véhicule (1) par l'observateur du champ d'affichage depuis la position d'observation prédéfinie, et en fonction d'un déplacement propre déterminé du véhicule (1), un cadrage d'image de la deuxième image est déterminé qui comprend ledit au moins un objet, et l'image d'affichage corrigée est déterminée en fonction du cadrage d'image de la deuxième image.

2. Procédé selon la revendication 1, dans lequel la deuxième image comprend une image stéréo et le cadrage d'image de la deuxième image est déterminé en fonction d'une position du conducteur de véhicule et d'une position de détection de la deuxième image.

3. Procédé selon l'une quelconque des revendications précédentes, dans lequel une première position actuelle dudit au moins un objet est déterminée en fonction de la deuxième image et/ou du cadrage d'image de la deuxième image, et l'image d'affichage corrigée est déterminée en fonction de la première position et d'une deuxième position qui présente ledit au moins un objet dans le modèle d'environnement de véhicule.

4. Procédé selon l'une quelconque des revendications précédentes, dans lequel une particularité d'image caractéristique dudit au moins un objet est déterminée en fonction de la deuxième image et/ou du cadrage d'image de la deuxième image, et l'image d'affichage corrigée est déterminée en fonction de la particularité d'image.

5. Procédé selon l'une quelconque des revendications précédentes 1 à 4, dans lequel la particularité d'image caractéristique comprend un bord d'objet respectif dudit au moins un objet.

6. Procédé selon l'une quelconque des revendications précédentes, dans lequel une couleur et/ou la luminosité de l'élément graphique sur l'image d'affichage corrigée est/sont adaptée(s) en fonction d'une texture d'image caractéristique dudit au moins un objet sur la première image et/ou la deuxième image et/ou le cadrage d'image de la deuxième image.

7. Dispositif (150) d'exploitation d'un affichage tête haute (5) qui est configuré pour effectuer un procédé selon l'une quelconque des revendications 1 à 6.

8. Système de détermination d'image (110) pour un affichage tête haute (5), comprenant :
- une unité d'évaluation (120) qui est réalisée pour détecter au moins un objet prédéfini en fonction de données d'image prédéfinies d'une première image détectée d'une série d'images, et pour déterminer une position dudit au moins un objet,
- une unité de prédiction (130) qui est réalisée pour déterminer un déplacement absolu et/ou un déplacement relatif dudit au moins un objet par rapport au véhicule (1), en fonction d'au moins un signal de capteur prédéfini,
- une unité de scène (140) qui est réalisée pour déterminer un modèle d'environnement de véhicule tridimensionnel en fonction de ladite au moins une première image de la série d'images et du déplacement absolu et/ou relatif déterminé(s) dudit au moins un objet,
- un dispositif (150) selon la revendication 7.
